# EUROPEAN PATENT SPECIFICATION

(11) **EP 1 090 558 B1**
(45) Date of publication and mention of the grant of the patent: **19.04.2006**
(21) Application number: 99203295.3
(22) Date of filing: 08.10.1999
(51) Int. Cl.: A23L 1/308, A23L 1/164

(54) **Psyllium husk product**
Produkt, welches Psyllium-Spelze enthält
Produit contenant de la glume de psyllium

(43) Date of publication of application: 11.04.2001
(73) Proprietor: SOCIETE DES PRODUITS NESTLE S.A., 1800 Vevey (CH)
(72) Inventor: Burri, Josef, 1066 Epalinges (CH); Guex, Claude, 1400 Yverdon-les-Bains (CH)
(74) Representative: Thomas, Alain

(56) References cited:
- US-A- 5 382 443
- US-A- 5 384 136
- US-A- 5 384 144

## Description

The present invention relates to a psyllium husk containing intermediate product, a process for manufacturing the intermediate product, a ready-to-eat cereal product containing the intermediate product, and a process for manufacturing the ready-to-eat cereal product.

### The state of the art

EP0105195 (SEARLE) discloses a process for sanitizing psyllium hydrophilic mucilloid by exposure to moist heat under elevated pressure in an extruder.

WO9507632 (KELLOGG) discloses a ready-to-eat cereal having superior organoleptic properties while containing from about 6 to 19% by weight of extruded pre-wetted pure psyllium.

US5223298 (KELLOGG) discloses a ready-to-eat cereal product obtained by admixing a precooked bulk cereal ingredient with an intermediate product which preferably contains about 75% psyllium and forming the mixture into shaped cereal pieces which contain about 2-30% by dry weight psyllium.

EP0144644 (PROCTER & GAMBLE) discloses an expanded high fiber bar made by a process comprising dry mixing about 10 to 80% by weight of psyllium mucilloid, about 10 to 30% by weight percent expander and further dietary fiber from a grain source, and extruding the mixture with water at a temperature of from 150 to 200°C.

US 5 384 144 and 5 384 136 discloses a pasta product enriched with a psyllium composition produced by extruding psyllium and water, optionally with flour and sugar.

### The objects of the invention

A first object of the present invention is to provide a cooked-extruded psyllium husk containing intermediate product which comprises from about 84 to 96% by weight psyllium husk and which is suitable for manufacturing a ready-to-eat cereal end product.

A second object of the present invention is to provide a process for manufacturing such a psyllium husk containing intermediate product.

A third object of the present invention is to provide a ready-to-eat cereal product containing the intermediate psyllium husk product which may be eaten as such or in addition to a light meal such as a musli or a yogourt, for example.

A fourth object of the present invention is to provide a process for manufacturing such a ready-to-eat cereal product,

### The invention

To this end, the present psyllium husk containing intermediate product consists of a cooked-extruded mixture comprising, in percent by weight of the intermediate product, from 84 to 96% of psyllium husk, from 3 to 8% of oil or fat, up to 10% of cereal bran, up to 10% of vegetable binder and up to 1.5% disodium phosphate.

The present process for manufacturing a psyllium husk containing intermediate product consists of preparing a mixture comprising, in parts by weight, from 84 to 96 % of psyllium husk, from 3 to 8 % oil or fat, up to 10 % of cereal bran, up to 10 % of vegetable binder, up to 1.5 % of disodium phosphate and added water up to a water content of from 24 to 45%, cooking-extruding the mixture at a temperature of from 130 to 220°C under a pressure of from 10 to 18 MPa for from 5 to 50 s, obtaining a rope of expanded thermoplastic mass, cutting the rope into pieces, and drying them.

The present ready-to-eat cereal product consists of agglomerated particles and/or flakes of psyllium husk containing intermediate product according to the invention, further cereal product and milk solids which are coated with a syrup mainly comprising sugar and vegetable oil or fat.

The present process for manufacturing a ready-to-eat cereal product consists of preparing a dry mixture of particles and/or flakes of psyllium husk containing intermediate product according to the invention, further cereal product and milk solids, agglomerating the particles and/or flakes by mixing the dry mixture with a syrup mainly comprising sugar and vegetable oil or fat, and drying the agglomerates thus obtained.

It has surprisingly been found that it was possible in this way to provide a cooked-extruded psyllium husk containing intermediate product which comprises from about 84 to 96% by weight psyllium husk and which is suitable for manufacturing a ready-to-eat cereal end product containing it which may be eaten as such or in addition to a light meal such as a musli or a yogourt, for example.

### General description of the intermediate product

The present cooked-extruded psyllium husk containing intermediate product comprises, in percent by weight of the intermediate product, from 84 to 96% of psyllium husk, from 3 to 8% of oil or fat, up to 10% of cereal bran, up to 10% of vegetable binder and up to 1.5% disodium phosphate.

The psyllium husk may be in powdered form, for example.

The oil or fat may be butter oil and/or a vegetable oil or fat which may act as lubricating agent in the cooking-extruding process, for example.

The psyllium husk containing intermediate product preferably comprises from 2 to 10% of cereal bran.

The cereal bran may be wheat, barley, oat, rice and/or corn bran or bran concentrate, for example.

The psyllium husk containing intermediate product preferably comprises from 2 to 10% of vegetable binder.

The vegetable binder may be a flour, especially a cereal or carob seed germ flour, a starch, especially a native starch from wheat, barley, rice, tapioca, potato and/or corn, maltodextrine, or a vegetable gum such as gum arabic, guar gum and/or gum carragheenan, for example.

The psyllium husk containing intermediate product may also further comprise added vitamins, oligoelements, sodium chloride and/or antioxidants, for example.

### General description of the process for manufacturing the intermediate product

The present process for manufacturing a psyllium husk containing intermediate product consists of preparing a mixture comprising, in parts by weight, from 84 to 96 % of psyllium husk, from 3 to 8 % of oil or fat, up to 10 % of cereal bran, up to 10 % of vegetable binder, up to 1.5 % of disodium phosphate and added water up to a water content of from 24 to 45%, cooking-extruding the mixture at a temperature of from 130 to 220°C under a pressure of from 10 to 18 MPa for from 5 to 50 s, obtaining a rope of expanded thermoplastic mass, cutting the rope into pieces, and drying them.

The psyllium husk may be in powdered form, for example.

The oil or fat may be butter oil and/or a vegetable oil or fat which may act as lubricating agent, for example.

The mixture preferably comprises from 2 to 10 % of cereal bran.

The cereal bran may be wheat, barley, oat, rice and/or corn bran or bran concentrate, for example.

The mixture preferably comprises from 2 to 10 % of vegetable binder.

The vegetable binder may be a flour, especially a cereal or carob seed germ flour, a starch, especially a native starch from wheat, barley, rice, tapioca, potato and/or corn, maltodextrine, or a vegetable gum such as gum arabic, guar gum and/or gum carragheenan, for example.

The mixture may also further comprise added vitamins, oligoelements, sodium chloride and/or antioxidants, for example.

The mixture may be prepared by first mixing together powdery components to obtain a dry mix and then mixing together the dry mix and liquid or fluid components.

This mixing step may be carried out in a first mixing section of a traditional food extruder, especially a twin screw extruder, for example.

Cooking the mixture may then be carried out in subsequent sections of the extruder where the mixture is heated, compressed and sheared so that it forms a cooked thermo plastic mass.

The thermo plastic mass may be extruded by having it pushed by the extruder screw or twin screw through the openings of a die provided for at an end of the extruder.

The die may have one or more circular openings having of from 2 to 5 mm in diameter, for example.

The thermo plastic mass may be extruded through the die into an open space at ambiant temperature and at atmospheric pressure, for example.

The presence of oil or fat in the mixture to be cooked-extruded restricts any tendency for the extruded rope of thermoplastic mass to expand a lot while coming out from the die.

Cutting into pieces the thus obtained rope of expanded thermoplastic mass may be carried out by a two or more blade cutter rotating adjacent to the die openings, for example.

Before being dried, the pieces may be flaked by rolling, namely by passing between a pair of rollers, for example.

They may then be dried down to a residual water content of from 1.0 to 4.0% by weight, for example.

The drying step may be carried out on a belt dryer, with hot air, for example.

### General description of the ready-to-eat product

The present ready-to-eat cereal product thus consists of agglomerated particles and/or flakes of psyllium husk containing intermediate product, further cereal product and milk solids which are coated with a syrup mainly comprising sugar and vegetable oil or fat.

The further cereal product may be cooked-extruded, expanded or flaked cereals, for example.

The intended cereals may be wheat, barley, oat, rice and/or corn, for example.

The milk solids may be a skimmed milk powder and/or a demineralised whey powder, for example.

The ready-to-eat product may comprise, in parts by weight, from 20 to 50 parts of psyllium husk containing intermediate product, from 20 to 50 parts of further cereal product, from 5 to 15 parts of milk solids, from 15 to 40 parts of sugar and from 10 to 30 parts of vegetable oil or fat, for example.

The respective parts of sugar and vegetable oil or fat are the main components of the syrup by means of which the particles and/or flakes of psyllium husk containing intermediate product, further cereal product and milk solids are agglomerated with each other.

The sugar may be sucrose, dextrose and/or fructose, for example.

The vegetable oil or fat may be palm kernel fat, coco nut fat and/or any similar, relatively high melting fat or blend of vegetable oil or fat, for example.

The syrup may further comprise added aromas such as vanillin, antioxidants, sodium chloride and emulsifiers such as soya lecithin, for example.

### General description of the process for manufacturing the ready-to-eat product

The present process for manufacturing a ready-to-eat cereal product consists of preparing a dry mixture of particles and/or flakes of psyllium husk containing intermediate product, further cereal product and milk solids, agglomerating the particles and/or flakes by mixing the dry mixture with a syrup mainly comprising sugar and vegetable oil or fat, and drying the agglomerates thus obtained.

The syrup may be prepared by mixing together from 15 to 40 parts of sugar, from 10 to 30 parts of vegetable oil or fat, from 8 to 24 parts of water, from 0.5 to 1.5 parts of sodium chloride and adequate minute amounts of aromas such as vanillin, antioxidants and emulsifiers such as soya lecithin, for example.

Mixing the dry mixture of particles and/or flakes with the syrup may be carried out by means of any adequate mixing apparatus such as a screw mixer of the helical spring type with an axial sprinkling nozzle or with a coating drum, for example.

The dry mixture and the syrup may be mixed in a proportion of from about one third to two fifth of syrup for three fifth to two thirds of dry mixture, for example.

The agglomerates thus obtained may be dried down to a residual water content of from 1.0 to 4.0% by weight, on a belt dryer with hot air for example.

As the case may be, the agglomerates may then be slightly reduced in size by passing through a sieve which may have a mesh size of from 5 to 15 mm, for example.

The ready-to-eat product thus obtained may be conditioned in a packing providing for its protection against humidity, such as a packing made of a film with aluminium foil, for example.

The following examples are given as illustration of embodiments of the psyllium husk containing intermediate product and its manufacturing process, as well as of the ready-to-eat cereal product containing the intermediate product and its manufacturing process. The parts and percentages are by weight.

### Example 1

For manufacturing a psyllium husk containing intermediate product, a mixture was prepared which had the following composition, (in parts, except added water) :

| | |
|---|---|
| psyllium husk fine powder | 88 |
| oat bran concentrate | 6 |
| carob seed germ flour | 5.5 |
| disodium phosphate | 0.5 |
| sunflower oil | 7.6 |
| added water, up to a water | |
| content of | 27% |

For preparing the mixture, the powders were first mixed together to obtain a dry mix. The dry mix, oil and added water were then mixed together in the extruder. The mixture obtained in this way was cooked-extruded with the aid of a BC-45H type CLEXTRAL twin screw extruder having a screw diameter of 55 mm and a total processing length of 800 mm.

Cooking-extruding was carried out at 180°C under 14 MPa for 30 s, the two intermeshing screws rotating at 300 rpm. The cooked thermoplastic mass obtained in this way was extruded through a die having two circular openings 2.5 mm in diameter.

The thermoplastic mass was extruded into ambiant air and immediately cut with a four blade cutter rotating adjacent to the openings at 4500 rpm.

The particles thus obtained were flaked between a pair of rollers down to a thickness of 0.8 mm.

The flakes were then dried with hot air on a belt dryer to a residual water content of 1.4%, and cooled.

### Example 2

For manufacturing a ready-to-eat cereal product containing the intermediate product, a syrup was prepared which had the following composition (parts):

| | |
|---|---|
| sucrose | 21.35 |
| vegetable oil blend | 14 |
| sodium chloride | 0.5 |
| vanillin | 0.05 |
| soya lecithin | 0.05 |
| citric acid | 0.05 |
| water | 8 |

For preparing the syrup, the components were mixed together in a double walled tank while being heated to about 50°C.

A dry mixture was prepared by mixing together 34 parts of psyllium husk containing intermediate product flakes obtained as disclosed in Example 1, 26 parts of thin oat flakes, and 6 parts of demineralized whey powder.

The dry mixture was mixed with 44 parts of syrup by means of a coating drum or tumbler.

The agglomerates thus obtained were dried with hot air on a belt dryer to a residual water content of 2.0%.

The dried agglomerates were then slightly reduced in size by passing through a sieve which had a mesh size of 8 mm.

The ready-to-eat product thus obtained was eventually bulk packed in a packing made of a film with aluminium foil.

The ready-to-eat product had a chewy texture and an appetizing taste. They could be eaten as such or in addition to a musli or to a yogourt.

## Claims

1. A psyllium husk containing intermediate product consisting of a cooked-extruded mixture comprising, in percent by weight of the intermediate product, from 84 to 96% of psyllium husk, from 3 to 8% of oil or fat, up to 10% of cereal bran, up to 10% of vegetable binder and up to 1.5% disodium phosphate.

2. A process for manufacturing a psyllium husk containing intermediate product, which consists of preparing a mixture comprising, in parts by weight, from 84 to 96 % psyllium husk, from 3 to 8 % oil or fat, up to 10 % cereal bran, up to 10 % of vegetable binder, up to 1.5 % of disodium phosphate and added water up to a water content of from 24 to 45%, cooking-extruding the mixture at a temperature of from 130 to 220°C under a pressure of from 10 to 18 MPa for from 5 to 50 s, obtaining a rope of expanded thermoplastic mass, cutting the rope into pieces, and drying them.

3. A process according to claim 2, in which, before being dried, the pieces are flaked by rolling.

4. A process according to claim 2, in which the pieces are dried down to a residual water content of from 1.0 to 4.0% by weight.

5. A ready-to-eat cereal product consisting of agglomerated particles and/or flakes of psyllium husk containing intermediate product according to claim 1, further cereal product and milk solids which are coated with a syrup mainly comprising sugar and vegetable oil or fat.

6. A ready-to-eat cereal product as claimed in claim 5, which comprises, in parts by.weight, from 20 to 50 parts of psyllium husk containing intermediate product, from 20 to 50 parts of further cereal product, from 5 to 15 parts of milk solids, from 15 to 40 parts of sugar and from 10 to 30 parts of vegetable oil or fat.

7. A process for manufacturing a ready-to-eat cereal product, which consists of preparing a dry mixture of particles and/or flakes of psyllium husk containing intermediate product according to claim 1, further cereal product and milk solids, agglomerating the particles and/or flakes by mixing the dry mixture with a syrup mainly comprising sugar and vegetable oil or fat, and drying the agglomerates thus obtained.

8. A process as claimed in claim 7, wherein the syrup is prepared by mixing together from 15 to 40 parts of sugar, from 10 to 30 parts of vegetable oil or fat, from 8 to 24 parts of water and from 0.5 to 1.5 parts of sodium chloride.

9. A process as claimed in claim 7, wherein the agglomerates are dried down to a residual water content of from 1.0 to 4.0% by weight.

10. A process as claimed in claim 7, wherein the agglomerates are reduced in size by parsing through a sieve which has a mesh size of from 5 to 15 mm.

## Revendications

1. Produit intermédiaire contenant des glumes de psyllium, constitué d'un mélange cuit-extrudé comprenant, en pourcentage en poids du produit intermédiaire, de 84 à 96 % de glumes de psyllium, de 3 à 8 % d'huile ou de graisse, jusqu'à 10 % de son de céréales, jusqu'à 10 % de liant végétal et jusqu'à 1,5 % de phosphate disodique.

2. Procédé de fabrication d'un produit intermédiaire contenant des glumes de psyllium, consistant à préparer un mélange comprenant, en parties en poids, de 84 à 96 % de glumes de psyllium, de 3 à 8 % d'huile ou de graisse, jusqu'à 10 % de son de céréales, jusqu'à 10 % de liant végétal, jusqu'à 1,5 % de phosphate disodique et de l'eau ajoutée jusqu'à l'obtention d'une teneur en eau de 24 à 45 %, à cuire-extruder le mélange à une température de 130 à 220°C et à une pression de 10 à 18 MPa pendant 5 à 50 s, à obtenir un ruban d'une masse thermoplastique expansée, à découper le ruban en morceaux et à les sécher.

3. Procédé selon la revendication 2, dans lequel on transforme les morceaux en flocons par laminage avant de les sécher.

4. Procédé selon la revendication 2, dans lequel on sèche les morceaux jusqu'à l'obtention d'une teneur résiduelle en eau de 1,0 à 4,0 % en poids.

5. Produit prêt à être mangé à base de céréales, constitué de particules et/ou de flocons agglomérés d'un produit intermédiaire contenant des glumes de psyllium selon la revendication 1, d'un produit supplémentaire à base de céréales et de solides du lait, qui sont enrobés d'un sirop comprenant essentiellement du sucre et une huile ou une graisse végétale.

6. Produit prêt à être mangé à base de céréales selon la revendication 5, comprenant, en parties en poids, de 20 à 50 parties d'un produit intermédiaire contenant des glumes de psyllium, de 20 à 50 parties d'un produit supplémentaire à base de céréales, de 5 à 15 parties de solides du lait, de 15 à 40 parties de sucre et de 10 à 30 parties d'huile ou de graisse végétale.

7. Procédé de fabrication d'un produit prêt à être mangé à base de céréales, consistant à préparer un mélange sec de particules et/ou de flocons d'un produit intermédiaire contenant des glumes de psyllium selon la revendication 1, d'un produit supplémentaire à base de céréales et de solides du lait, à agglomérer les particules et/ou les flocons en mélangeant le mélange sec avec un sirop comprenant essentiellement du sucre et une huile ou une graisse végétale et à sécher les agglomérats ainsi obtenus.

8. Procédé selon la revendication 7, dans lequel on prépare le sirop en mélangeant ensemble de 15 à 40 parties en poids de sucre, de 10 à 30 parties d'huile ou de graisse végétale, de 8 à 24 parties d'eau et de 0,5 à 1,5 partie de chlorure de sodium.

9. Procédé selon la revendication 7, dans lequel on sèche les agglomérats jusqu'à l'obtention d'une teneur résiduelle en eau de 1,0 à 4,0 % en poids.

10. Procédé selon la revendication 7, dans lequel on réduit la taille des agglomérats en les faisant passer à travers un tamis ayant une taille des mailles de 5 à 15 mm.

## Patentansprüche

1. Flohsamen-Schalen enthaltendes Zwischenprodukt, das aus einer kochextrudierten Mischung besteht, die, in Gewichtsprozent des Zwischenprodukts, von 84 bis 96 % Flohsamen-Schalen, von 3 bis 8 % Öl oder Fett, bis zu 10 % Getreidekleie, bis zu 10 % pflanzliches Bindemittel und bis zu 1,5 % Dinatriumphosphat umfasst.

2. Verfahren zur Herstellung eines Flohsamen-Schalen enthaltenden Zwischenprodukts, das in der Herstellung einer Mischung, die, in Gewichtsteilen, von 84 bis 96 % Flohsamen-Schalen, von 3 bis 8 % Öl oder Fett, bis zu 10 % Getreidekleie, bis zu 10 % pflanzliches Bindemittel, bis zu 1,5 % Dinatriumphosphat sowie zugesetztes Wasser bis zu einem Wassergehalt von 24 bis 45 % umfasst, dem Kochextrudieren der Mischung bei einer Temperatur von 130 bis 220°C unter einem Druck von 10 bis 18 MPa von 5 bis 50 s, dem Gewinnen eines Strangs einer expandierten thermoplastischen Masse, dem Schneiden des Strangs in Stücke und deren Trocknen besteht.

3. Verfahren nach Anspruch 2, bei dem die Stücke, bevor sie getrocknet werden, durch Walzen in Flocken überführt werden.

4. Verfahren nach Anspruch 2, wobei die Stücke bis zu einem Restwassergehalt von 1,0 bis 4,0 Gew.-% getrocknet werden.

5. Essfertiges Cerealienprodukt, das aus agglomerierten Teilchen und/oder Flocken aus einem Flohsamen-Schalen enthaltenden Zwischenprodukt nach Anspruch 1, einem weiteren Getreideprodukts und Milchfeststoffen, die mit einem Sirup, der überwiegend Zucker und ein Pflanzenöl oder -fett umfasst, überzogen sind, besteht.

6. Essfertiges Cerealienprodukt nach Anspruch 5, das, in Gewichtsteilen, von 20 bis 50 Teile des Flohsamen-Schalen enthaltenden Zwischenprodukts, von 20 bis 50 Teile des weiteren Getreideprodukts, von 5 bis 15 Teile Milchfeststoffe, von 15 bis 40 Teile Zucker und von 10 bis 30 Teile Pflanzenöl oder -fett umfasst.

7. Verfahren zur Herstellung eines essfertigen Cerealienprodukts, das in der Herstellung einer Trockenmischung von Teilchen und/oder Flocken eines Flohsamen-Schalen enthaltenden Zwischenprodukts nach Anspruch 1, eines weiteren Cerealienprodukts und von Milchfeststoffen, dem Agglomerieren der Teilchen und/oder Flocken durch Mischen der Trockenmischung mit einem Sirup, der hauptsächlich Zucker und Pflanzenöl oder -fett umfasst, und dem Trocknen der auf diese Weise erhaltenen Agglomerate besteht.

8. Verfahren nach Anspruch 7, wobei der Sirup **dadurch** hergestellt wird, dass man von 15 bis 40 Teile Zucker, von 10 bis 30 Teile Pflanzenöl oder -fett, von 8 bis 24 Teile Wasser und von 0,5 bis 1,5 Teile Natriumchlorid vermischt.

9. Verfahren nach Anspruch 7, wobei die Agglomerate bis zu einem Restwassergehalt von 1,0 bis 4,0 Gew.-% getrocknet werden.

10. Verfahren nach Anspruch 7, wobei die Größe der Agglomerate **dadurch** vermindert wird, dass man sie durch ein Sieb, das eine Maschengröße von 5 bis 15 mm aufweist, hindurchführt.
